# EUROPÄISCHE PATENTANMELDUNG

(11) **EP 1 281 886 A1**
(43) Veröffentlichungstag der Anmeldung: **05.02.2003**
(21) Anmeldenummer: 02017093.2
(22) Anmeldetag: 30.07.2002
(51) Int. Cl.: F16F 1/12, B25C 5/16, B25C 5/02

(54) **Zugfederbefestigung in einem Heftgerät**

(30) Priorität: 04.08.2001 DE 10138447
(71) Anmelder: NOVUS GmbH & Co. KG, 49808 Lingen (Ems) (DE)
(72) Erfinder: Quaing, Reinhard, 48488 Emsbüren (DE); Heskamp, Ingo, 49809 Lingen (DE)
(74) Vertreter: Schirmer, Siegfried, Dipl.-Ing.

(57) **Zusammenfassung**

Bei einem Heftgerät mit einem Magazin (1) zum Aufnehmen von Heftklammern, bei dem der Klammerschieber (16) mit einer Zugfeder (3) in Richtung auf ein vorderes Ende des Magazin (1) vorgespannt ist, soll eine automatische Montage der Zugfeder (3) ermöglicht werden.

Erfindungsgemäß ist die Zugfeder (3) eine Schraubenfeder, die an einem oder beiden Enden eine Verdickung (3c) aufweist, mit der sie in eine entsprechende Aufnahmeausnehmung (22,24) eingehängt ist. Da bei einer Verdickung (3c) das Erfordernis des Ausrichtens im Sinne einer Drehung des Endabschnitts der Feder entfällt, kann die Zugfeder (3) mit dem bzw. den eine Verdickung (3c) aufweisenden Endabschnitt automatisiert eingehängt werden.

## Beschreibung

Die Erfindung betrifft ein Heftgerät mit einem Magazin zum Aufnehmen von Heftklammern, in dem ein Klammerschieber längsverschieblich geführt und das mit einer Abdeckschiene abgedeckt ist, wobei der Klammerschieber mit einer Zugfeder in Richtung auf ein vorderes Ende des Magazins vorgespannt ist.

Ein derartiges Heftgerät ist bspw. aus dem deutschen Gebrauchsmuster 299 11 971.8 bekannt und hat sich im praktischen Gebrauch bestens bewährt. Bei der bekannten Bauart besteht hinsichtlich der Montage allerdings dahingehend ein Problem, daß die Zugfeder mit ihren Endabschnitten an entsprechenden Aufhängepunkten des Heftgeräts eingehängt werden muß. Hierfür ist sie an ihren Enden ösenartig ausgebildet, wobei die Ösen zunächst in die richtige Orientierung gebracht werden müssen, bevor sie eingehängt werden können. Dieser Vorgang ist schwierig zu automatisieren und stellt bei einem ansonsten weitestgehend automatisierten Fertigungs- und Montageprozeß ein gewisses Hindernis dar.

Die Aufgabe der Erfindung besteht darin, ein gattungsgemäßes Heftgerät dahingehend weiterzuentwickeln, daß eine automatisierte Montage der Zugfeder möglich ist.

Diese Aufgabe wird erfindungsgemäß bei einem gattungsgemäßen Heftgerät dadurch gelöst, daß die Zugfeder eine Schraubenfeder ist, die an einem oder beiden Enden (jeweils) eine Verdickung aufweist, mit der sie in (jeweils) eine entsprechende Aufnahmeausnehmung eingehängt ist. Da bei einer Verdickung das Erfordernis des Ausrichtens im Sinne einer Drehung des Endabschnitts der Feder entfällt, kann die Zugfeder mit dem bzw. den (jeweils) eine Verdickung aufweisenden Endabschnitt(en) automatisiert eingehängt werden.

Bevorzugte Ausgestaltungen der Erfindung sind in den Unteransprüchen aufgezeigt.

Die Erfindung wird nachfolgend anhand eines Ausführungsbeispiels unter Bezugnahme auf eine Zeichnung erläutert, in der
- Fig. 1: eine schematische Längsschnittansicht eines erfindungsgemäßen Heftgeräts zeigt, in der die Zugfeder lediglich angedeutet ist und
- Fig. 2: einen Endabschnitt einer erfindungsgemäß verwendeten Zugfeder zeigt.

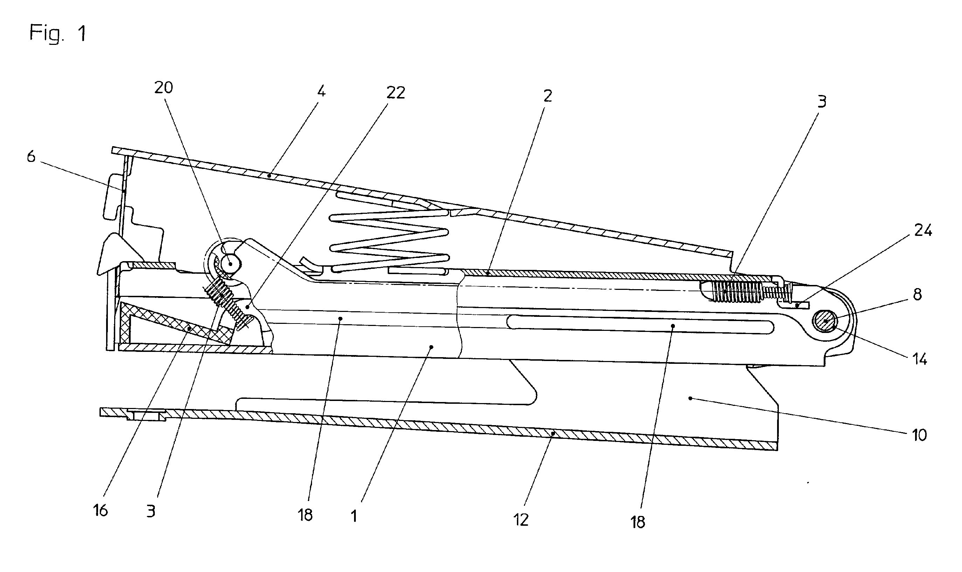

Zunächst sei auf Fig. 1 Bezug genommen, die eine an sich bekannte Anordnung eines Oberlader-Heftgeräts mit Magazin 1, Abdeckschiene 2 und (angedeuteter) Zugfeder 3 erläutert. Bei Oberlader-Heftgeräten wird überwiegend mit einer Abdeckschiene gearbeitet, die in Gebrauchslage des Gerätes das Magazin von oben verschließt.

An einem Gehäuseoberteil 4 ist ein klingenförmiger Treiber 6 beweglich aufgehängt. Das Gehäuseoberteil 4 ist um eine Achse 8 schwenkbar an einem Lagerbock 10 aufgehängt, der auf einer Grundplatte 12 sitzt.

Die Abdeckschiene 2 hat an ihrem hinteren Endabschnitt zwei Aufnahmeöffnungen 14 für die Achse 8, die als Langlöcher ausgebildet sind. Hierdurch ist die Abdeckschiene in Längsrichtung bewegbar, so daß sie unter der Wirkung der Zugfeder 3 mit ihrem vorderen Endabschnitt gegen den Treiber 6 anliegt.

Ein Klammerschieber 16 ist in dem im Querschnitt U-förmigen Magazin 1 mittels in Längsführungen 18 greifenden flanschartigen seitlichen Vorsprüngen (nicht dargestellt) längsverschieblich geführt und durch die Zugfeder 3 in Richtung auf den vorderen Endabschnitt (unterhalb des Treibers 6) des Magazins vorgespannt. Die Zugfeder 3 ist um eine im oberen Bereich des Magazins bzw. an der Abdeckschiene 2 gehaltene Rolle 20 umgelenkt und im hinteren Bereich des Heftgeräts unterhalb der Abdeckschiene 2 geführt.

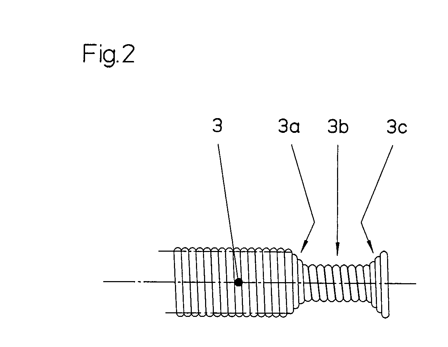

Fig. 2 zeigt eine Draufsicht auf einen Endabschnitt der erfindungsgemäß ausgeführten Zugfeder 3, wobei zweckmäßigerweise beide Endabschnitte in der dargestellten Weise ausgebildet sind. Die Schraubenfeder weist im Bereich ihres freien Endabschnitts zunächst einen kegelstumpfförmigen, sich verjüngenden Abschnitt 3a auf, an den sich eine Einschnürung 3b mit konstantem Durchmesser bzw. zylindrischer Form anschließt. Auf die Einschnürung 3b folgt erneut ein kegelförmiger Abschnitt 3c, der sich bis auf den ursprünglichen Durchmesser der Zugfeder in ihrem übrigen Teil erweitert und so eine erfindungsgemäße Verdickung am Ende der Zugfeder bildet. Der Durchmesser der Verdickung könnte kleiner sein als der des übrigen Teils der Zugfeder, muß aber selbstverständlich größer sein als der der Einschnürung, damit die Feder eingehängt werden kann.

Alternativ könnte die Verdickung durch einen Federabschnitt gebildet sein, dessen Durchmesser größer ist als der Durchmesser im übrigen Teil der Zugfeder, d.h. ohne eine Einschnürung bzw. einen im Durchmesser verringerten Abschnitt. Eine derartige Verdickung könnte durch die Windungen der Feder oder alternativ bspw. durch ein Verdickungselement gebildet sein, das am Ende der Zugfeder in geeigneter Weise befestigt wird. Dies könnte bspw. ein Kunststoffteil mit einem zylindrischen oder leicht kegelförmig verjüngten Schaft sein, dessen Durchmesser im wesentlichen dem Innendurchmesser der Zugfeder entspricht und der in diese einzuschrauben ist, wobei sich an dem Schaft eine insbesondere kugelförmige Verdickung befinden könnte, deren Durchmesser größer ist als der Außendurchmesser der Zugfeder.

In jedem Fall ermöglicht die Verdickung ein automatisches Einhängen in einem Aufnahmeschlitz o.ä.

Nochmals auf Fig. 1 Bezug nehmend, ist in dem Klammerschieber 16 ein erster Aufnahmeschlitz 22 und in der Abdeckschiene an deren hinterem Ende ein zweiter Aufnahmeschlitz 24 angedeutet, wobei die Zugfeder 3 mit ihren Endabschnitten gemäß Fig. 2 so in die genannten Aufnahmeschlitze 22, 24 einzusetzen ist, daß sich die Einschnürung 3b im unmittelbaren Schlitzbereich und der kegelförmige Abschnitt (Verdickung) 3c hinter dem jeweiligen Schlitz, von dem übrigen Teil der Feder 3 aus gesehen, befindet.

Die erfindungsgemäße Gestaltung der Feder hat neben den bereits genannten Vorteilen bei der automatisierten Montage den Vorteil, daß die Feder, verglichen mit einer herkömmlichen Befestigungsöse, stabiler und bruchunempfindlicher ist, so daß zusätzlich eine größere Zuverlässigkeit und Dauerhaftigkeit des gesamten Heftgeräts erreicht wird.

### Bezugszeichenliste:

- 1: Magazin
- 2: Abdeckschiene
- 3: Feder
- 3a: kegelförmiger Abschnitt
- 3b: Einschnürung
- 3c: kegelförmiger Abschnitt (Verdickung)
- 4: Gehäuseoberteil
- 6: Treiber
- 8: Achse
- 10: Lagerbock
- 12: Grundplatte
- 14: Aufnahmeöffnung
- 16: Klammerschieber
- 18: Längsführung
- 20: Rolle
- 22, 24: Aufnahmeschlitz

## Patentansprüche

1. Heftgerät mit einem Magazin (1) zum Aufnehmen von Heftklammern, in dem ein Klammerschieber (16) längsverschieblich geführt ist, wobei der Klammerschieber mit einer Zugfeder (3) in Richtung auf ein vorderes Ende des Magazin (1) vorgespannt ist, **dadurch gekennzeichnet, daß** die Zugfeder (3) eine Schraubenfeder ist, die an einem oder beiden Enden (jeweils) eine Verdickung (3c) aufweist, mit der sie in (jeweils) eine entsprechende Aufnahmeausnehmung (22, 24) eingehängt ist.

2. Heftgerät nach Anspruch 1, **dadurch gekennzeichnet, daß** die Verdickung durch ein an dem jeweiligen Ende der Zugfeder befestigtes Verdickungselement gebildet ist.

3. Heftgerät nach Anspruch 2, **dadurch gekennzeichnet, daß** das Verdickungselement einen zylindrischen oder leicht kegelförmigen, in die Schraubenfeder geschraubten Schaft mit einer kugelförmigen Verdickung aufweist.

4. Heftgerät nach einem der vorangehenden Ansprüche, **dadurch gekennzeichnet, daß** zwischen der Verdickung (3c) und dem übrigen Teil der Zugfeder (3) eine Einschnürung (3b) gebildet ist, deren Durchmesser kleiner ist als der des übrigen Teils der Zugfeder.

5. Heftgerät nach Anspruch 4, **dadurch gekennzeichnet, daß** die Einschnürung (3b) zylindrisch ist.

6. Heftgerät nach Anspruch 4 oder 5, **dadurch gekennzeichnet, daß** die Schraubenfeder (3) zur Bildung der Einschnürung (3b) und der Verdickung (3c) eingeschnürt und verdickt ausgebildet ist.

7. Heftgerät nach einem der Ansprüche 4 bis 6, **dadurch gekennzeichnet, daß** die Verdickung (3c) einen Durchmesser aufweist, der größer, gleich oder kleiner als der Durchmesser des übrigen Teils der Zugfeder (3) ist.

8. Heftgerät nach einem der vorangehenden Ansprüche, **dadurch gekennzeichnet, daß** die Zugfeder (3) mit einem Ende in einer Aufnahmeausnehmung (22) des Klammerschiebers (16) eingehängt ist.

9. Heftgerät nach einem der vorangehenden Ansprüche, **dadurch gekennzeichnet, daß** das Magazin (1) mit einer Abdeckschiene (2) abgedeckt ist, wobei die Zugfeder (3) mit einem Ende in einer Aufnahmeausnehmung (24) der Abdeckschiene (3) eingehängt ist, so daß die Abdeckschiene (2) in Richtung auf das vordere Ende des Magazins (1) federbelastet ist.

10. Heftgerät nach Anspruch 9, **dadurch gekennzeichnet, daß** die Zugfeder (3) über eine im oberen Bereich des Magazins (1) gehaltene Rolle (20) umgelenkt ist.
